# EUROPEAN PATENT SPECIFICATION

(11) **EP 3 760 605 B1**
(45) Date of publication and mention of the grant of the patent: **05.10.2022**
(21) Application number: 20182256.6
(22) Date of filing: 25.06.2020
(51) Int. Cl.: C05B 17/00, C05D 9/02, C05F 7/00, C05F 11/02, B01J 20/02, B01J 20/06, B01J 20/20, B01J 20/32, C02F 1/28, C02F 101/10

(54) **METHOD OF PHOSPHORUS RECOVERY FROM WASTEWATER, IN PARTICULAR FROM SLUDGE WATER**
VERFAHREN ZUR RÜCKGEWINNUNG VON PHOSPHOR AUS ABWASSER, INSBESONDERE AUS SCHLAMMWASSER
PROCÉDÉ DE RÉCUPÉRATION DE PHOSPHORE À PARTIR D'EAUX USÉES, EN PARTICULIER À PARTIR D'EAU DE BOUES

(30) Priority: 01.07.2019 CZ 20190043
(43) Date of publication of application: 06.01.2021
(73) Proprietor: Vysoká skola technická a ekonomická v Ceskych Budejovicich, 37001 Ceské Budejovice (CZ)
(72) Inventor: Marousek, Josef, 37001 Litvínovice (CZ); Stehel, Vojtech, 37004 Ceské Budejovice (CZ); Vochozka, Marek, 37008 Ceské Budejovice (CZ); Marousková, Anna, 37001 Litvínovice (CZ); Strunecký, Otakar, 37001 Ceské Budejovice (CZ); Kolár, Ladislav, 37005 Ceské Budejovice (CZ)
(74) Representative: Sedlák, Jirí

(56) References cited:
- YANG QI ET AL: "Effectiveness and mechanisms of phosphate adsorption on iron-modified biochars derived from waste activated sludge", BIORESOURCE TECHNOLOGY, ELSEVIER, AMSTERDAM, NL, vol. 247, 22 September 2017 (2017-09-22), pages 537-544, XP085298945, ISSN: 0960-8524, DOI: 10.1016/J.BIORTECH.2017.09.136
- MICHÁLEKOVÁ-RICHVEISOVÁ BARBORA ET AL: "Iron-impregnated biochars as effective phosphate sorption materials", ENVIRONMENTAL SCIENCE AND POLLUTION RESEARCH INTERNATIONAL, ECOMED, LANDSBERG, DE, vol. 24, no. 1, 11 October 2016 (2016-10-11), pages 463-475, XP036128356, ISSN: 0944-1344, DOI: 10.1007/S11356-016-7820-9 [retrieved on 2016-10-11]
- AJMAL ZEESHAN ET AL: "Probing the efficiency of magnetically modified biomass-derived biochar for effective phosphate removal", JOURNAL OF ENVIRONMENTAL MANAGEMENT, ELSEVIER, AMSTERDAM, NL, vol. 253, 24 October 2019 (2019-10-24), XP085917788, ISSN: 0301-4797, DOI: 10.1016/J.JENVMAN.2019.109730 [retrieved on 2019-10-24]
- DATABASE WPI Week 201638 Thomson Scientific, London, GB; AN 2016-03058X XP002800949, & CN 105 170 091 A (UNIV NANJING INFORMATION SCI & TECHNOLOG) 23 December 2015 (2015-12-23)
- DATABASE WPI Week 201953 Thomson Scientific, London, GB; AN 2019-31165Q XP002800950, & CN 109 529 767 A (MCC HUATIAN ANHUI ENERGY CONSERVATION) 29 March 2019 (2019-03-29)

## Description

### Field of the Invention

The invention relates to a method of phosphorus recovery from wastewater, in particular from sludge water.

### Background of the Invention

More than 70% of the world's soils have a very low phosphorus content, making phosphorus a limiting factor for plant growth. Thus, the lack of phosphorus in the soil is a worldwide problem. During last decades, the situation is even more critical, because growing more powerful varieties leads to a unilateral intensification of production nitrogen fertilization; due to decline in animal production, phosphorus is not added from livestock effluents; gradual depletion of quality phosphate deposits for the production of mineral fertilizers leads to a disproportionate increase in the price of phosphate fertilizers, which is hardly affordable in some countries.

The total phosphorus content in the soil ranges from 0.02 to 0.05%, more in soils rich in organic matter. However, it occurs in a large number of fractions, most of which contain phosphorus inaccessible to plants. There is a number of methods for the fractionation of soil phosphorus, where the method which determines aluminium-bound, iron-bound, calcium-bound phosphorus and occluded phosphorus in soil solution is still widely used. However, according to this method, it is not possible to determine and fractionate organic phosphorus, which often makes up more than one half of the total phosphorus in the soil. Thus, the fraction of phosphorus in soil solution, phosphorus of microbial biomass, exchangeable phosphorus and iron, aluminium and calcium phosphates, phosphorus of secondary and primary P-mineral, mobile organic phosphorus and stable organic phosphorus can be determined. It is obvious that proposal for using a source of phosphorus as a plant nutrient should take into account not only the amount of phosphorus in the product, but also its form, and thus accessibility to plants.

Each person produces an average of 1.5 litres of urine per day, which contains 1 to 5 g of phosphates in this amount. By converting this amount, we find that the wastewater of a city with 100,000 inhabitants contains 150 m³ of urine per day with 375 kg of PO4^{III}. Because human water consumption is approximately 175 I per day in our country, it is 17,500 m3 of wastewater per day with an average content of 21 mg of PO4^{III} /l. It is therefore clear that municipal wastewater is a source of phosphorus that deserves attention. An even richer source of phosphorus is sludge water, produced in the sludge management of municipal wastewater treatment plants after anaerobic sludge stabilization. Sludge water includes fugate, a liquid phase separated from solid particles of digestate-waste from fermenters of agricultural biogas plants. It often contains up to hundreds of mg/l of phosphorus, but much lower concentrations are common, 2.5 to 27.0 mg/l of P. The efficiency of phosphorus utilization from applied fertilizers is in the range from 10 to 25%. Many publications that describe simple surface balances report an excess of phosphorus in the agroecosystem and a high risk of water pollution by eutrophication involving phosphorus. However, this is a very simplified idea, because only the soil system balance is reliable. In addition to the omnidirectional inputs and outputs of phosphorus, it also takes into account its transformations and circulation in the soil. Not only the intensity of sorption processes in the soil, but also the type and form of the source of phosphorus, climate, microbial activity of the soil and the plant itself have an effect. Phosphorus can also accumulate significantly in the soil, while the content of its plant-accessible forms decreases.

Sewage sludge is a seemingly more accessible source of phosphorus for soil fertilization. For instance, the Czech Republic produces 150 to 170 thousand tons per year with an average phosphorus content of 1.9%. However, there is a risk of soil contamination, and therefore the use of sludge is subject to strict legislation, which greatly limits the interest of growers in the use of sewage sludge for fertilization. The following is today regarded as the most suitable sources of phosphorus for recycling: wastewater, especially sludge water, i.e. fugate after anaerobic digestion in biogas plants, slurry, sewage sludge and bottom sediments.

The need for phosphate fertilizers in the EU is evidenced by the fact that more than 1.2 million tonnes per year in terms of pure phosphorus are consumed here. Today, about 80% of extracted phosphorus is used for the production of fertilizers. Currently, the most promising source for recycled phosphorus is sludge water after anaerobic sludge stabilization, in which struvite precipitation can yield up to 90% of phosphate phosphorus and 50 to 80% of total phosphorus. Struvite is MgNH₄PO₄ . 6H₂O and can be used directly as a slow-acting P-fertilizer. It is formed at higher pH by the addition or presence of Mg²⁺ salts in sludge waters. Therefore, it occurs spontaneously in pipe systems or machinery of the sludge management of municipal wastewater treatment plants, where clogging causes resistances in the duct, and thus greater energy consumption.

Phosphorus can be precipitated from water with Fe³⁺, Al³⁺, Fe²⁺ and Ca²⁺ salts. Tertiary precipitation is most suitable at the outlet of the wastewater treatment plant. Primary precipitation is less effective, upstream of the settling tank as well as simultaneous precipitation, i.e. to activation or upstream of the settling tank for activated sludge. However, the disadvantage is poorly accessible phosphorus to plants. Another method is biological phosphorus removal - by using poly-P-bacteria or polyphosphate of accumulating bacteria, up to 10% of phosphorus in the sludge dry matter can be achieved.

Another possible technology is the crystallization of phosphorus. Calcium phosphate crystallizes on crystallization nuclei, which are particles of sand, slag, diatomaceous earth in a fluidized-bed reactor. The most promising crystallization technology is the crystallization of struvite, which proceeds well especially at higher concentrations of phosphorus in sludge water. Struvite usable as a fertilizer for fertilizing soils is a sparingly soluble crystalline substance that slowly releases both phosphorus and nitrogen in the soil. Another group of technologies are adsorption technologies, where sorbents with Fe, Ca, Al are used, whose interaction with PO₄³⁻ leads to the formation of minerals. Sorption properties are used, for example, by Yang, Q., Wang, X., Luo, W., Sun, J., Xu, Q., Chen, F., ... & Li, X. (2017). Effectiveness and mechanisms of phosphate adsorption on iron-modified biochars derived from waste activated sludge. Bioresource technology, 247, 537-544, Micháleková-Pichveisová B. et.al. (2016). Iron-impregnated biochars as effective phosphate sorption material. Environmental science and pollution research International, 24, 463-475, Ajmal Zeeshan et.al. (2019). Probing the efficiency of magnetically modified biomass-derived biochar for effective phosphate removal. Journal of environmental management, 253, 1-9, as in patent applications CN 105 170 091 and CN 109 529 767. Nevertheless preparation of the biochar is demanding for the conditions of the preparation because of high-temperature pyrolysis and necessity of nitrogen atmosphere. The disadvantages of these solutions are mainly that the iron is not sufficiently bound in the adsorbent and there would certainly be an immediate washout or leaching of ferric ions from adsorbent in industrial operation. Thus, none of these publications envisages an industrially applicable solution. An interesting method is the capture of phosphorus in artificial wetlands, or electrocoagulation, which, unlike chemical coagulates, does not burden the recipient with dissolved salts. Another method is the magnetic isolation of phosphorus - PO₄³⁻ are precipitated by lime on crystallization nuclei, which are formed by magnetite (Fe₃O₄) and amplify the magnetic properties of particles. The particles are then removed in an induced magnetic field.

The capture of phosphorus by biomass is also promising, cyanobacteria (*Phormidium bohneri, Rhodobacter capsulatus*) as well as algae (*Chlorella vulgaris*) or algae with macrophytes (*Chlorella vulgaris* and *Lemna minuskula*) are used. Experiments with general phytoplankton are also successful. Today, the following are considered modern technologies: bacterial precipitation of PO₄³⁻, use of hydrated Fe oxides for precipitation or adsorption of PO₄³⁻, struvite precipitation and application of nanotechnologies. For struvite, the problem is a cheap source of magnesium. Nevertheless, this technology is especially recommended for developed countries where it competes with the treatment of sewage sludge. For developing countries, only the separation of urine and slurry and, where appropriate, their further use and processing are recommended. Phosphorus recovery using ion exchange has been proposed. NH⁴⁺ is removed from sludge water by cation-exchange resin, natural zeolite and PO₄³⁻ by anion-exchange resin.

When considering recycled phosphorus as a plant nutrient used to fertilize soils, the availability and acceptability of this nutrient must be considered. In general, mobile organic and inorganic phosphorus is crucial for plants, especially phosphorus in soil solution, phosphorus of microbial biomass, mobile and potentially available organic phosphorus, and mobile and potentially acceptable inorganic phosphorus. Phosphorus in the soil, which is used only minimally in plant nutrition, is phosphorus of ferric phosphates, phosphorus of non-hydrolyzable organophosphates, non-extractable or residual phosphorus and phosphorus of specific organophosphates, which is bound in humification products. The phosphorus of sewage sludge, phosphorus of sludge water and other forms of phosphorus bound to easily hydrolyzable and thus decomposable organic matter is easily and readily accessible to plants. It is necessary to examine whether recycling technologies for phosphorus, whether precipitation, crystallization technologies, etc., reduce the accessibility of phosphorus. Phosphorus is extremely low mobile in soil and losses due to phosphorus leaching from the soil are negligible. It is therefore not true that a sparingly soluble phosphate fertilizer, such as struvite, is an advantage for fertilizing and nourishing plants.

Therefore, the task of the invention is to develop such a method of phosphorus recovery from wastewater, in particular from sludge water, which overcomes the above-mentioned drawbacks, which provides recovered phosphorus from wastewater subsequently accessible to plants in fertilizer form and which is economically advantageous and easy to produce.

### Summary of the Invention

The set task has been resolved by the method of phosphorus recovery from wastewater, in particular from sludge water in accordance with this invention, in which the phosphorus present in wastewater is adsorbed on the surface of the adsorbent. The adsorbent is biochar, which has its own research-proven beneficial properties on plants and soil. Biochar has only slight ion-exchange properties because it has no dissociable groups that could be used in ion exchange, However, biochar has very significant sorption properties and its sorption capacity is saturated with trivalent iron ions. Subsequently, the biochar is neutralized with sodium hydroxide solution, forming ferric hydroxide on the surface of the biochar, i.e. the adsorbent, and washed with water. Wastewater flows through the saturated adsorbent and phosphorus is captured on the adsorbent. It is the subject matter of the invention that firstly the biochar is saturated with trivalent iron ions, so that the biochar is washed with ferric chloride solution as a sorbens, wherein firm bonds between biochar and trivalent iron ions are obtained. After filling the sorption capacity of the adsorbent with phosphorus, the adsorbent is washed with dilute hydrochloric acid, followed by washing with sodium hydroxide solution thereby recovered phosphorus in the form of phosphate ferrite [Fe(PO₄)₃]⁶⁻ is obtained. Phosphate ferrite [Fe(PO₄)₃]⁶⁻ is dried and used as a fertilizer. If phosphorus-rich sludge water from the sludge management of the treatment plant is used, i.e. after anaerobic sludge stabilization, it is necessary to free it from organic substances suspended by sedimentation by sand filtration and eventually activation, because organic substances clog biochar very quickly. Biochar adsorbs phosphorus from wastewater until its sorption capacity is full.

In a preferred embodiment, the saturation of the biochar with trivalent iron ions is carried out by applying iron to the biochar in a solution which is prepared by dissolving ferrous waste in hydrochloric acid.

The advantages of the method of phosphorus recovery from wastewater, in particular from sludge water in accordance with this invention are mainly that it provides recovered phosphorus from wastewater, which is subsequently accessible to plants in fertilizer form and is economically advantageous and easy to produce.

### Example of the invention embodiments

200 g of the biochar was covered in 10% FeCl₃ solution and left to stand at 20°C for 12 hours. After filtration, a 5% NaOH solution is allowed to flow through the wet biochar until the pH does not change at the outlet. This is followed by washing the biochar with water until the pH does not change at the outlet. In the case of a wet biochar-based adsorbent, dry matter is detected after the water has been removed. A phosphate solution is applied to the adsorbent. Concentrations of 0 - 20 - 40 - 60 - 80 - 100 mg P/1000 ml were used in five variants. The adsorbed amount of phosphorus P per 1 g of treated biochar and the equilibrium concentration of phosphorus P in the solution after adsorption were determined. The maximum absorbable amount of phosphorus P per unit of adsorbent can be determined from the dependence of the absorbed amount of the corresponding equilibrium solution.

Biochar in the described modification is able to capture 25 mg of phosphorus P per 1 g of adsorbent, and that this adsorption takes place up to a maximum concentration of the equilibrium solution of 52 mg/l of phosphorus P from the original concentration of 80 mg/l. This means that 100 kg of the biochar modified in this way captures 2.5 kg of phosphorus P, i.e. 11.1 kg of P₂O₅. If we compare this result with the classic phosphate P - fertilizer, superphosphate with 16% P₂O₅, the result is interesting. Unfortunately, with a lower concentration of phosphorus P in wastewater, the yield of adsorption deteriorates sharply: If there is only 20 mg of phosphorus P/l in wastewater, 1 g of biochar captures only 3.6 mg of phosphorus P, the content of phosphorus P in wastewater is reduced by only one fifth (from 20 mg of P to 16 mg of P), and 100 kg of biochar captures only 1.6 kg of P, i.e. just over 10% of the amount of phosphorus captured from water containing 80 mg of P/l.

It was necessary to determine what is the agrochemical quality of this product. Since the reactions of phosphate fertilizers are known to be relatively slow due to the low mobility of phosphorus in the soil, we have tried to replace the long-term contact of the source of phosphorus with the soil as follows:
The soil sample, which was medium loamy cambisol modal, saturated to the maximum capillary capacity with water, was released from the Kopecky's ring, crushed and placed together with the examined phosphorus source in a 1000 ml polyethylene PE bottle, closed and shaken on a rotary shaker for 24 hours. After this time, it was stored in a thermostat at 28°C for 3 days. After removal from the thermostat, the bottle was emptied into a flat photographic dish, aerated, returned to the PE bottle and the loss of evaporated water was added. This procedure was repeated 5 times. Because the reactions of phosphates with soil are highly dependent on the amount of water in the soil, as well as microbial processes of organic phosphorus bond formation, the whole procedure was repeated in a variant with 1.5 times the amount of water corresponding to the maximum capillary capacity.

Four fertilizers were compared as phosphorus sources in this experiment: biochar with phosphorus captured according to simplified method 1, i.e. the adsorbent with captured phosphorus was washed with 2% NaOH solution and subsequently dried; phosphate ferrite according to method 2; struvite precipitated from sludge water, and original sludge water from the municipal wastewater treatment plant in Prague, whose phosphorus concentration was 49 mg/l of PO₄³⁻, total phosphorus of 62 mg/l of P.

After completion of the preparation of the experimental soil with phosphorus sources, the determination of mobile phosphorus, the determination of extractable soil phosphorus and its five fractions and the determination of organic phosphorus were performed. The CaP I, CaP II and CaP III fractions are less accessible to plants from I to III, the FeP fraction is almost inaccessible to plants. Organic phosphorus is initially inaccessible to plants, but over time it can mineralize and thus become accessible. The rate of mineralization depends on the degree of stability of the organic matter to hydrolysis and oxidation. However, part of the organic phosphorus is in any case inaccessible to plants.

The experimental loamy cambisol before the start of the experiment had the composition of soil phosphorus given in the following table:

| P_{mob} mg/1000 g | Pₑₓₜᵣ mg/1000 g | CaP I % Pₑₓₜᵣ | CaP II % Pₑₓₜᵣ | CaP III % Pₑₓₜᵣ | AIP % Pₑₓₜᵣ | FeP % Pₑₓₜᵣ | P_{org} mg/1000 g | P ₜₒₜ mg/1000 g |
|---|---|---|---|---|---|---|---|---|
| 24±4 | 139±15 | 10 | 14 | 22 | 26 | 28 | 294 | 1830 |

The total amount of phosphorus in the soil usually varies from 0.01 to 0.15%. The vast majority of total phosphorus in soils is unacceptable to plants. In order to obtain measurable indicative results, we chose the addition of total phosphorus in the experimental variants much higher - the same for all four phosphorus sources, namely 0.62 g of P/100 g. Therefore, sludge water had to be thickened by evaporation in a water bath to one tenth of the volume.

The results of the experiment are given in the following table, which shows the soil phosphorus in the experimental loamy cambisol modal after the addition of 620 mg of P/100 g of phosphorus source after the experiment

| | Phosphorus source | | | |
|---|---|---|---|---|
| | sludge water | Struvite | Biochar 1 | phosphate ferrite |
| Mobile phosphorus P_{mob} [mg/1000 g] | 182 ± 42 | 68 ± 8 | 75 ± 5 | 79 ± 8 |
| Extractable phosphorus Pₑₓₜᵣ [mg/1000 g] | 389 ± 21 | 247 ± 30 | 200 ± 26 | 192 ± 20 |
| Organic phosphorus P_{org} [mg/1000 g] | 658 ± 75 | 395 ± 48 | 297 ± 35 | 288 ± 33 |
| CaP I [% Pₑₓₜᵣ] | 20 | 8 | 12 | 10 |
| CaP II [% Pₑₓₜᵣ] | 22 | 12 | 18 | 20 |
| CaP III [% Pₑₓₜᵣ] | 34 | 48 | 17 | 19 |
| AIP [% Pₑₓₜᵣ] | 16 | 17 | 16 | 9 |
| FeP [% Pₑₓₜᵣ] | 12 | 15 | 37 | 42 |

The results given in the table show that the proposed product biochar 1 and phosphate ferrite differ quite little from each other and that it will therefore be probably more economically advantageous and easier to produce the product biochar 1. Both products, biochar 1 and phosphate ferrite, have a relatively high content of the FeP iron fraction inaccessible to plants. However, compared to struvite, recommended by the literature, they have much less of little accessible fraction of CaP III and also less organic phosphorus, which also contains part of the phosphorus inaccessible to plants. Interestingly, the content of mobile phosphorus is very similar for all three recyclates of phosphorus.

Unfortunately, the experiment showed that the most mobile phosphorus and the least plant-inaccessible phosphorus fractions are in the original sludge water or fugate, the application of which to the soil would also be the most economically advantageous method. However, the problem is compliance with the legislative measures for its application.

### Industrial applicability

The method of phosphorus recovery from wastewater, in particular from sludge water in accordance with this invention can be used especially after anaerobic treatment of sludge in municipal wastewater treatment plants or from other wastewater containing mineral phosphorus, which is advantageous compared to other technologies to achieve the same goal because saturated sorbent - biochar can be used directly as a fertilizer and soil properties improving agent. This is because biochar itself has a number of favourable properties when applied to the soil.

## Claims

1. A method of phosphorus recovery from wastewater, in particular from sludge water, in which phosphorus is adsorbed on a surface of an adsorbent, where the adsorbent is prepared as biochar saturated with trivalent iron ions, the biochar is subsequently neutralized with sodium hydroxide solution to form ferric hydroxide and washed with water, wastewater flows through the saturated adsorbent and phosphorus is captured on the adsorbent, **characterized in that** firstly the biochar is saturated with trivalent iron ions, so that the biochar is washed with ferric chloride solution as a sorbens, wherein firm bonds between biochar and trivalent iron ions are obtained, wherein after filling the sorption capacity of the adsorbent with phosphorus, the adsorbent is washed with dilute hydrochloric acid, followed by washing with sodium hydroxide solution thereby recovered phosphorus in the form of phosphate ferrite [Fe(PO₄)₃]⁶⁻ is obtained, and where phosphate ferrite [Fe(PO₄)₃]⁶⁻ is dried and used as a fertilizer.

2. The method according to claim **1 characterized in that** the saturation of the biochar with trivalent iron ions is carried out by applying iron to the biochar in a solution which is prepared by dissolving ferrous waste in hydrochloric acid.

## Patentansprüche

1. , Verfahren zur Rückgewinnung von Phosphor aus Abwasser, insbesondere aus Schlammwasser, bei dem Phosphor an der Oberfläche eines Adsorptionsmittels adsorbiert wird, wobei das Adsorptionsmittel als mit dreiwertigen Eisenionen gesättigte Biokohle hergestellt wird, wobei die Biokohle anschließend mit einer Natronlauge unter Bildung von Eisen(III)-hydroxid neutralisiert und mit Wasser gewaschen wird, das Abwasser über das gesättigte Adsorptionsmittel geleitet wird und der Phosphor auf dem Adsorptionsmittel aufgefangen wird, **dadurch gekennzeichnet, dass** zunächst die Biokohle mit dreiwertigen Eisenionen gesättigt wird, so dass die Biokohle mit Eisen(III)-chloridlösung als Sorbens gewaschen wird, wobei feste Bindungen zwischen Biokohle und dreiwertigen Eisenionen erhalten werden, wobei nach dem Auffüllen der Sorptionskapazität des Adsorptionsmittels mit Phosphor, das Adsorptionsmittel mit verdünnter Salzsäure gewaschen wird, gefolgt vom Waschen mit Natriumhydroxidlösung, wodurch wiedergewonnener Phosphor in Form von Phosphatferrit [Fe(PO₄ )₃ ]⁶⁻ erhalten wird, und wobei Phosphatferrit [Fe(PO₄ )₃ ]⁶⁻ getrocknet und als Düngemittel verwendet wird.

2. . Verfahren nach Anspruch 1, **dadurch gekennzeichnet, dass** die Sättigung der Biokohle mit dreiwertigen Eisenionen durch Aufbringen von Eisen auf die Biokohle in einer Lösung erfolgt, die durch Auflösen der Eisenabfälle in Salzsäure hergestellt wird.

## Revendications

1. Procédé de récupération de phosphore à partir d'eaux usées, en particulier d'eaux boueuses, dans lequel le phosphore est adsorbé sur une surface d'un adsorbant, l'adsorbant étant préparé sous la forme d'un biochar saturé d'ions de fer trivalents, le biochar étant ensuite neutralisé avec une solution d'hydroxyde de sodium pour former de l'hydroxyde ferrique et lavé avec de l'eau, les eaux usées s'écoulant à travers l'adsorbant saturé et le phosphore étant capturé sur l'adsorbant, **caractérisé en ce que** le biochar est tout d'abord saturé d'ions de fer trivalents, de sorte que le biochar est lavé avec une solution de chlorure ferrique comme sorbant, dans lequel des liaisons fermes entre le biochar et les ions fer trivalents sont obtenues, dans lequel après avoir rempli la capacité de sorption de l'adsorbant avec du phosphore, l'adsorbant est lavé avec de l'acide chlorhydrique dilué, suivi d'un lavage avec une solution d'hydroxyde de sodium, ce qui permet d'obtenir du phosphore récupéré sous la forme de ferrite de phosphate [Fe(PO₄)₃]⁶⁻, et où la ferrite de phosphate [Fe(P04 )₃]⁶⁻ est séchée et utilisée comme engrais.

2. Procédé selon la revendication 1, **caractérisé en ce que** la saturation du biochar avec des ions de fer trivalent est effectuée en appliquant du fer au biochar dans une solution qui est préparée en dissolvant des déchets ferreux dans de l'acide chlorhydrique.
